# EUROPEAN PATENT SPECIFICATION

(11) **EP 1 133 454 B1**
(45) Date of publication and mention of the grant of the patent: **14.11.2007**
(21) Application number: 00960650.0
(22) Date of filing: 12.09.2000
(51) Int. Cl.: C03C 13/00, F01N 7/16

(54) **A MUFFLER HOUSING WITH A FIBROUS SOUND ABSORBING MASS ABLE TO BE BIOLOGICALLY DEGRADED**
SCHALLDÄMPFER MIT EINER BIOLOGISCH ABBAUBAREN SCHALLDÄMMENDEN FASERMASSE
ECHAPPEMENT AVEC MASSE FIBREUSE INSONORISANTE BIODEGRADABLE

(30) Priority: 14.09.1999 DE 19943831; 22.10.1999 DE 19950883
(43) Date of publication of application: 19.09.2001
(73) Proprietor: SAINT-GOBAIN ISOVER G+H Aktiengesellschaft, 67059 Ludwigshafen (DE)
(72) Inventor: KATZSCHMANN, Axel, 68723 Schwetzingen (DE); HIRSCHMANN, Klemens, 68542 Heddesheim (DE)
(74) Representative: GROSSE BOCKHORNI SCHUMACHER
(86) International application number: PCT/EP2000/008909
(87) International publication number: WO 2001/019743

(56) References cited:
- EP-A- 0 412 878
- EP-A- 0 459 897
- EP-A- 0 692 616
- WO-A-93/22251
- WO-A-98/23547
- N VORONINA: "Acoustic properties of fibrous materials" APPLIED ACOUSTICS,GB,ELSEVIER PUBLISHING, no. 42, 1994, pages 165-174, XP002076455 ISSN: 0003-682X

## Description

The invention relates to a muffler housing for muffling the sound of gases of combustion from internal combustion engines and to a sound absorbing fibrous masses able to be biologically degraded for use in motor vehicle muffling systems.

Owing to their noisy operation internal combustion engines and more particularly gasoline and diesel engines require sound absorbing for the emerging gases resulting from combustion. The emerging gases of combustion are conventionally conducted away through a so-called muffler, there being a simultaneous reduction in the noise emitted. The sound muffling as such then substantially takes place in the said muffler.

The muffler is normally provided with sheet metal baffles, perforated tubes and the like for conducting away the exhaust gas and also furthermore in some cases with mineral fiber. The mineral fiber can in this case be tamped into the muffler or be introduced in the form of prefabricated shapes. For sound muffling at least a part of the gases of combustion penetrate into the mineral fiber filling.

Therefore during operation the mineral fiber is subjected to particularly powerful deleterious effects. The temperature within the muffler housing may be substantially in excess of 700° C. Owing to material entrained in the exhaust gas current a condensate will be formed within an extremely short time in the muffler housing with a high aggressive chemical potential. Dependent on the design of the exhaust system, for example with or without a catalytic converter, it is possible for the condensate to reach a highly acidic or basic pH value. The corrosive action of exhaust gases is worsened by changing operational conditions, i.e. high temperatures after long periods of operation and damp, cold exhaust gas in the warming up phase and in inactive periods. Furthermore there may be substantial amounts of salt so that a salt containing condensate is produced.

To be suitable a fibrous sound absorbing mass must furthermore be able to resist mechanical loads. Owing to the discontinuous operation of internal combustion engines and more particularly of gasoline and diesel engines the exhaust gas current is introduced into the muffler system in a pulsed manner, this leading to a sort of shock wave effect on the sound absorbing fibrous mass of the muffler. Furthermore the muffling system and the fibrous sound absorbing mass located therein is adversely affected by the vibrations of the engine. In the case of vehicles there is furthermore the problem of jerks being transmitted to the vehicle which result from unevenness of the road surface. As regards the sound absorbing material there are accordingly extremely powerful deleterious effects, to which sound muffling products are not subjected in other cases of application to the same degree.

A suitable fibrous sound absorbing mass must furthermore withstand all the above mentioned unfavorable effects for the full working life of the muffler system, that is to say possibly several years.

In the case of the employment of rock fiber as a fibrous sound absorbing mass a further problem arises owing to its bead content. During the manufacture of mineral fiber it is known that a fraction of the molten material is not converted into fibers and it is formed into beads. The word beads is employed in this connection to mean non-fibrous melt residues, whose diameter may be many times larger than the diameter of the fiber so that they therefore do not possess the elongated form of a fiber.

Such beads however fail to make any contribution to the desired sound muffling action of the mineral fiber and in fact increase the mass of the mineral fiber in an undesired manner.

Furthermore the beads present in fibrous sound absorbing mass for mufflers are inclined to vibrate in the pulsating exhaust gas current in relation to the fibers, so that owing to their increased mass as compared with that of the individual mineral fibers they have a deleterious effect on them and may cause a partial destruction of the fiber material. Owing to the weakening of the fibrous sound absorbing mass so caused the action of the sound absorbing mass fiber is reduced in an undesired fashion. A further disadvantage is that fiber particles are released and may escape into the surroundings via the exhaust gas current.

In addition to the release of fibers or to the pulverization of fibers by the action of beads, even in normal operation there may be an escape of fibers or fiber particles from the fiber mass in the muffler owing to the action of the exhaust gas flow. This is something which may be substantially caused by the fact that owing to above mentioned conditions in the muffler housing and the necessity of keeping the fibrous sound absorbing mass sufficiently permeable to gas, there are no satisfactory ways of adequately mechanically securing the fibers of the muffling mineral mass, for instance by adhesive.

The escape of fibers and pulverized fiber from the muffler system into the surroundings is extremely problematical to the extent that the fibers are able to find their way into the lungs and are not able to be biologically degraded. The inhalation of such fibers can lead to a substantially increased risk to health and is accordingly to be prevented.

In addition to there being a contamination of the environment during normal operation of a muffler system there may also be an increased risk of danger to the environment when operation is faulty. Furthermore, during the processing of muffler inserts and cartridges considerable attention is to be paid to proper disposal of muffler scrap and the fibrous sound absorbing mass therein.

In the prior art in addition to e-glass (continuous glass fiber) with a fiber diameter over 20 µm and preferably basalt fiber material is employed as a fibrous sound absorbing mass in muffler and exhaust systems. Basalt fiber, which has fiber diameters under 10 µm, is owing to its high chemical and thermal stability particularly suitable for employment in muffler systems for internal combustion engines.

Basalt fiber can however have a certain fraction of fibers in a range able to enter the lungs. Basalt fiber is biologically degradable in a manner which is characterized by a half life of less than 300 days in a physiological environment. Basalt fiber is therefore considered to possess a certain carcinogenic potential. Accordingly the employment of basalt fiber as a fibrous sound absorbing mass involves health risks and is hence to be rejected.

One object of the present invention is to provide a material, which may be processed to yield fiber and is able to be physiologically degraded and furthermore is able to withstand the powerful deleterious effects in a muffler system for internal combustion engines. A further object of the present invention is to provide a fibrous sound absorbing mass and shapes of such mass, whose fibers do not lead to health risks. Still further, the invention is to provide a substitute material for basalt fiber, which may be employed as a fibrous sound absorbing mass in exhaust systems of internal combustion engines and is not injurious to health.

Such aims are to be achieved by the features of the independent claims, while preferred embodiments are recited in the dependent claims.

The invention is based on the surprising discovery that a composition and furthermore a fiber prepared therefrom is able to withstand the enormous alternating loads or unfavorable effects and also dynamic loads free of damage over long periods of operation, such damaging effects being those occurring normally during the use of fibrous sound absorbing mass in muffler and exhaust systems, said composition nevertheless being able to be degraded in a biological environment, said material having the following composition in percentages by weight:

| preferred | | |
|---|---|---|
| SiO₂ | 57 - 63 | 58.2 to 62.2 |
| Al₂O₃ | 0 - 4 | 0.05 to 2.05 |
| CaO | 10 - 25 | 12 to 23.5 |
| MgO | 5.5 - 18 | 8 to 18 |
| Na₂O | 0 - 7 | 0.5 to 6.5 |
| K₂O | 0 - 4 | 0.1 to 3.2 |
| Fe₂O₃ | 1 - 8 | 4.0 to 6.9 |
| TiO₂ | 0 - 3 | 0 to 1.1 |
| P₂O₅ | 0 - 2 | 0 to 1.1 |
| MnO | 0-2 | 0 to 1.1 |
| Impurities | 0 - 2 | 0 to 1.0 |

wherein the sum of the content of calcium oxide and magnesium oxide is in a range of 26.1 to 30.1 % by weight and the sum of sodium oxide and potassium oxide is in a range of 3.5 to 6.5% by weight. The surprising discovery has been made that such a fibrous sound absorbing mass can withstand extremely high deleterious effects or loads occurring more particularly in exhaust gas mufflers of internal combustion engines and are caused by shock waves, alternating thermal loads, changes in mechanical load and vibrations of the engine.

The document WO 98/23547 discloses fibrous additives for cement. Amongst them are two examples, which have a material composition according to claim 1. However, these fibrous additives are for use as cement admixers only and the average fiber diameter differs from those of claim 1.

In accordance with a preferably preferred form of the invention the composition includes the following components in percentages by weight:

| | |
|---|---|
| SiO₂ | 58.5 to 61.0 |
| Al₂O₃ | 0.9 to 2.05 |
| CaO | 12 to 20 |
| MgO | 8.0 to 18 |
| Na₂O | 3.0 to 5.0 |
| K₂O | 0.1 to 1.0 |
| Fe₂O₃ | 5.0 to 7.0 |
| TiO₂ | 0 to 0.4 |
| P₂O₅ | 0 to 0.4 |
| MnO | 0 to 0.4 |
| Impurities | 0 to 0.4 |

wherein the sum of calcium oxide and magnesium oxide is in a range of 26.1 to 30.1% by weight and preferably in a range of 28 to 30% by weight and the sum of sodium oxide and potassium oxide is in a range of 3.5 to 6.5% by weight and more particularly 3.5 to 4.5% by weight.

The composition may be processed in a conventional, well known fiber manufacturing plant to produce fiber.

A method suitable for the fiber manufacture from the compositions in accordance with the invention is the nozzle blowing method, as is familiar in the production of mineral fiber.

Fibers with a mean diameter of 8 to 20 µm and preferably in a range of 10 to 20 µm have been found to be particularly suitable. Furthermore, for the specific case of application it has been found advantageous to have a bead content in the fiber structure below 20%. This has a favorable effect as regards the working life and results in reduced loss of fiber from the muffler. In this case a fraction of less than 15% by weight of beads, such beads having a diameter of under 250 µm, as related to the total quantity of fiber is preferred. Tests have demonstrated that the blow out loss rate is under 15% and may even be kept under 10%.

While in the case of basalt fibrous sound absorbing mass the desired blow out loss rates of less than 15% were typically adhered to with a mean fiber diameter of 8 to 10 µm, in the case of the biosoluble fiber of the invention with a mean fiber diameter of over 10 µm a substantially coarser fiber may be produced, it being possible even to reduce the bead content to one below that of basalt. Coarser fibers offer the advantage of being able to be drawn out to a greater degree of elongation, a greater fiber length again meaning that the blow off loss is minimized.

This accordingly means that the gap in the diameter range between basalt fibrous sound absorbing mass so far available and E-glass fiber is closed. It remains to be noted that as compared with monofilic e-glass fiber fibrous sound absorbing mass produced in accordance with the so-called Sillan method there is a wider range of available diameters, something that has an advantageous effect as regards the marginal stability of complex muffler housing forms and furthermore as regards the acoustic muffling outcome.

In connection with shock wave and thermal loads it has turned out to be expedient for the sum iron, sodium and aluminum oxide fraction to be larger than 11 %.

Fibrous sound absorbing mass having the composition of the invention possess a high biological degradability, the half life being less than 40 and preferably 35 days. The half life is found using the German protocol of 12.6.1998 (Gefahrstoffverordnung, Anhang V, Nr. 7), in accordance with which 2 mg of a fiber suspension of a fiber fraction with a length of over 5 µm, a diameter of below 3 µm and a length to diameter ratio of over 3:1 (WHO fiber) is administered to experimental animals intratracheally. At the same time this fibrous sound absorbing mass provides an acoustic barrier function even at high temperatures over extended periods of time and even with a high thermal load and under high mechanical strains.

To ensure better handling during further processing and/or for the manufacture of moldings it is possible for the fibrous sound absorbing mass in accordance with the invention to comprise an admixed binding agent content of up to 2.5% by weight of the overall composition of the fibrous sound absorbing mass. It is preferred for a phenolic resin to be employed as a binding agent. The binding agent combusts completely the first time the operating temperature of approximately 700° C is reached by the fibrous sound absorbing mass.

The binding agent solely serves for simplification of the handling of the fibrous sound absorbing mass during processing in the muffler housing, the mineral fiber being endowed with a greater dimensional stability.

The fibrous sound absorbing mass may be processed and manipulated in the simplest possible fashion in a known way by tamping the mineral fiber in the desired part of the muffler housing. In accordance with a further embodiment it is possible for the fibrous sound absorbing mass to be processed in an additional working step by means of known pressing and molding techniques to produce a molding or shaped body, which is then introduced in the intended part of the muffler housing.

A further advantage of the fibrous sound absorbing mass in accordance with the invention is that it possesses essentially the same properties as regards processing and physical and chemical stability as known and conventionally employed basalt fiber. Here again the muffling properties are in line with those of conventional basalt fiber.

Owing to this advantageous agreement as regards the said properties to be found with the fibrous sound absorbing mass of the invention and with basalt fiber the there is no longer a need of retooling for the manufacture of muffler systems, and more particularly mufflers. Moreover, there is no necessity to change the geometry of the mufflers.

The identity of properties between the fibrous sound absorbing mass in accordance with the invention and basalt fiber as regards physical and chemical parameters relevant for manufacture and parameter relevant for operation isindicated in table 1.

**Table 1**

| Parameter | Fibrous sound absorbing mass in accordance with the invention | Basalt mineral fiber |
|---|---|---|
| Humidity | ≤ 0.5% | ≤ 0.5% |
| Content of binding agent | ≤ 2.5% | ≤ 2.5% |
| Beads (> 250 µm) | ≤ 20% | ≤ 20% |
| Mean fiber diameter | ≥ 8 µm | ≥ 8 µm |
| Bulk weight | 120 kg/m³ | 120 kg/m³ |
| Resistance to acid (residue) | ≥ 90% | ≥ 90% |
| Loss on annealing | ≤ 2.5% | ≤ 2.5% |
| Recrystallisation behavior 720°C, 10 Min., oxidizing conditions, tube examination. | No sinter and recrystallization effects. | No sinter and recrystallization effects. |
| Recrystallisation behavior 720°C, 650°C, 2 h, oxidizing conditions | No sinter and recrystallization effects. | No sinter and recrystallization effects. |
| Blow off loss, Gillet method | < 15% | < 15% |
| Acoustic behavior - Kundt tube | | |
| 500-70 Hz | > 60% | > 60% |
| > 1000 Hz | > 90% | > 90% |

The blow off rate was found using apparatus as normally employed in industry.

In this respect the blow off rate is given as percentage loss of the fiber mass or, respectively, of the text fiber between the start of the text and the end thereof.

### Example 1: measurement of blow off loss rate.

A fibrous sound absorbing mass in accordance with the invention with the composition indicated in table 2 had a blow off rate under 10% after 8000 cycles.

**Table 2**

| tested fiber composition | |
|---|---|
| SiO₂ | 58.5% by wt. |
| Al₂O₃ | 2.0% by wt. |
| CaO | 19.5% by wt. |
| MgO | 9.5% by wt. |
| Na₂O | 3.5% by wt. |
| K₂O | 0.2% by wt. |
| Fe₂O₃ | 6.5% by wt. |
| TiO₂ | 0.3% by wt. |

### Example 2 measurement of blow off loss rate.

A fibrous sound absorbing mass in accordance with the invention with the composition in accordance with table 3 had a blow off rate of under 10% after 8000 cycles.

**Table 3**

| tested fiber composition | |
|---|---|
| SiO₂ | 58.5% by wt. |
| Al₂O₃ | 2.0% by wt. |
| CaO | 12% by wt. |
| MgO | 17% by wt. |
| Na₂O | 3.5% by wt. |
| K₂O | 0.2% by wt. |
| Fe₂O₃ | 6.5% by wt. |
| TiO₂ | 0.% by wt. |

### Example 3

### Biological degradation of the fiber composition in accordance with the invention.

The biological stability of the fiber in accordance with the invention was found by testing on animals. The investigations were performed on a fiber fraction in accordance with the definition of World Health Organization (WHO Fiber). The fibers of the fiber fraction in this case have a length of over 5 µm, a diameter of under 3 µm and a length to diameter ratio of over 3:1. 2 mg of a fiber fraction were administered to experimental animals intratracheally.

The composition of the tested fiber fraction is indicated in table 4.

| | |
|---|---|
| SiO₂ | 60.23% by wt. |
| Al₂O₃ | 1.05% by wt. |
| Fe₂O₃ | 5.45% by wt. |
| TiO₂ | -- |
| CaO | 19.3% by wt. |
| MgO | 8.8% by wt. |
| Na₂O | 4.6% by wt. |
| K₂O | 0.4% by wt. |
| Impurities | Remainder |

The half life of the tested fiber fraction of the fiber composition in accordance with the invention amounted to 34 days. The fibers with this composition have turned out to be particularly advantageous for the specific application as fibrous sound absorbing mass, because they withstand deleterious effects in a particularly satisfactory fashion and owing to the rapid degradation same are satisfactory as regards health.

## Claims

1. A muffler housing for muffling the sound of gases of combustion from internal combustion engines, **characterized in that** as a muffling material it comprises at least in part a fibrous sound absorbing mass, made of fibers having a mean fibrous diameter of 8 to 20 µm and preferably over 10 to 20 µm and having a biologically degradable composition, which comprises the following components in % by weight
| preferred | | |
|---|---|---|
| SiO₂ | 57 - 63 | 58.2 to 62.2 |
| Al₂O₃ | 0 - 4 | 0.05 to 2.05 |
| CaO | 10 - 25 | 12 to 23.5 |
| MgO | 5.5 - 18 | 8 to 18 |
| Na₂O | 0 - 7 | 0.5 to 6.5 |
| K₂O | 0-4 | 0.1 to 3.2 |
| Fe₂O₃ | 1 - 8 | 4.0 to 6.9 |
| TiO₂ | 0 - 3 | 0 to 1.1 |
| P₂O₅ | 0-2 | 0 to 1.1 |
| MnO | 0-2 | 0 to 1.1 |
| Impurities | 0 - 2 | 0 to 1.0 |
wherein the sum of calcium oxide and magnesium oxide is in a range of 26.1 to 30.1% by weight and the sum of sodium oxide and potassium oxide is in a range of 3.5 to 6.5% by weight.

2. A muffler housing for muffling the sound of gases of combustion of internal combustion engines, **characterized in that** same comprises at least one sound muffling molding for use in muffler housings in motor vehicle muffling systems comprising a fibrous sound absorbing mass, made of fibers having a mean fibrous diameter of 8 to 20 µm and preferably over 10 to 20 µm and having a biologically degradable composition, which comprises the following components in % by weight
| preferred | | |
|---|---|---|
| SiO₂ | 57 - 63 | 58.2 to 62.2 |
| Al₂O₃ | 0 - 4 | 0.05 to 2.05 |
| CaO | 10 - 25 | 12 to 23.5 |
| MgO | 5.5 - 18 | 8 to 18 |
| Na₂O | 0 - 7 | 0.5 to 6.5 |
| K₂O | 0 - 4 | 0.1 to 3.2 |
| Fe₂O₃ | 1 - 8 | 4.0 to 6.9 |
| TiO₂ | 0 - 3 | 0 to 1.1 |
| P₂O₅ | 0 - 2 | 0 to 1.1 |
| MnO | 0 - 2 | 0 to 1.1 |
| Impurities | 0 - 2 | 0 to 1.0 |
wherein the sum of calcium oxide and magnesium oxide is in a range of 26.1 to 30.1% by weight and the sum of sodium oxide and potassium oxide is in a range of 3.5 to 6.5% by weight.

3. A muffler housing as set forth in claim 1 or 2, **characterized in that** the fiber composition comprises the following components in percentages by weight:
| | |
|---|---|
| SiO₂ | 58.5 to 61.0 |
| Al₂O₃ | 0.9 to 2.05 |
| CaO | 12 to 20 |
| MgO | 8.0 to 18 |
| Na₂O | 3.0 to 5.0 |
| K₂O | 0.1 to 1.0 |
| Fe₂O₃ | 5.0 to 7.0 |
| TiO₂ | 0 to 0.4 |
| P₂O₅ | 0 to 0.4 |
| MnO | 0 to 0.4 |
| Impurities | 0 to 0.4 |
wherein for the sum of calcium oxide and magnesium oxide is in a range of 26.1 to 30.1% by weight and preferably in a range of 28 to 30% by weight and the sum of sodium oxide and potassium oxide is in a range of 3.5 to 6.5% by weight, and preferably in a range of 3.5 to 4.5% by weight.

4. The muffler housing as set forth in any of the claims 1 to 3, **characterized by** the following composition in percentages by weight:
| | |
|---|---|
| SiO₂ | 58.5 |
| Al₂O₃ | 2.0 |
| CaO | 19.5 |
| MgO | 9.5 |
| Na₂O | 3.5 |
| K₂O | 0.2 |
| Fe₂O₃ | 6.5 |
| TiO₂ | 0.3 |

5. The muffler housing as set forth in any of the claims 1 to 3, **characterized by** the following composition in percentages by weight:
| | |
|---|---|
| SiO₂ | 58.5 |
| Al₂O₃ | 2.0 |
| CaO | 12 |
| MgO | 17 |
| Na₂O | 3.5 |
| K₂O | 0.2 |
| Fe₂O₃ | 6.5 |
| TiO₂ | 0.3 |

6. The muffler housing as set forth in any one preceding claim, **characterized in that** the fiber fraction with a fiber length of over 5 µm, a diameter of less than 3 µm and a length to diameter ratio of over 3:1 has a half life of less than 40 days and preferably less than 35 after intratracheal administration.

7. The muffler housing as set forth in any one of the preceding claims, **characterized in that** the sum of Fe₂O₃, Na₂O and Al₂O₃ in the composition is over 11 % thereof.

8. Use of a fibrous sound absorbing mass, made of fibers having a mean fibrous diameter of 8 to 20 µm and preferably over 10 to 20 µm and having a biologically degradable composition according to at least one of the preceding claims 1 to 7, for muffler housings in motor vehicle muffling systems.

## Patentansprüche

1. Schalldämpfertopf für die Schalldämmung von Gasen von Verbrennungsmotoren, **dadurch gekennzeichnet, dass** das Schalldämpfermaterial wenigstens teilweise eine Schalldämpferwolle aufweist, die aus Fasern mit einem mittleren Faserdurchmesser von 8 bis 20 µm, vorzugsweise größer als 10 bis 20 µm und einer biologisch abbaubaren Zusammensetzung gebildet sind, die folgende Bestandteile in Gew.-% umfaßt:
| bevorzugt | | |
|---|---|---|
| SiO₂ | 57 - 63 | 58,2 bis 62,2 |
| Al₂O₃ | 0 - 4 | 0,05 bis 2,05 |
| CaO | 10 - 25 | 12 bis 23,5 |
| MgO | 5,5 - 18 | 8 bis 18 |
| Na₂O | 0 - 7 | 0,5 bis 6,5 |
| K₂O | 0 - 4 | 0,1 bis 3,2 |
| Fe₂O₃ | 1 - 8 | 4,0 bis 6,9 |
| TiO₂ | 0 - 3 | 0 bis 1,1 |
| P₂O₅ | 0 - 2 | 0 bis 1,1 |
| MnO | 0 - 2 | 0 bis 1,1 |
| Verunreinigungen | 0 - 2 | 0 bis 1,0 |
wobei weiterhin gilt, daß die Summe aus Calciumoxid und Magnesiumoxid im Bereich von 26,1 bis 30,1 Gew.-% und die Summe aus Natriumoxid und Kaliumoxid im Bereich von 3,5 bis 6,5 Gew.-% liegt.

2. Schalldämpfertopf zur Schalldämmung von Verbrennungsabgasen von Verbrennungsmotoren, **dadurch gekennzeichnet, dass** der Schalldämpfertopf mindestens ein Schalldämpferformteil für die Verwendung in Schalldämpfertöpfen in Kfz-Schalldämpferanlagen aufweist, mit einer Schalldämpferwolle, die aus Fasern mit einem mittlerem Faserdurchmesser von 8 bis 20 µm und vorzugsweise über 10 bis 20 µm mit einer biologisch abbaubaren Zusammensetzung gebildet sind, welche die folgenden Bestandteile in Gewichtsprozent aufweist:
| bevorzugt | | |
|---|---|---|
| SiO₂ | 57 - 63 | 58,2 bis 62,2 |
| Al₂O₃ | 0 - 4 | 0,05 bis 2,05 |
| CaO | 10-25 | 12 bis 23,5 |
| MgO | 5,5 - 18 | 8 bis 18 |
| Na₂O | 0 - 7 | 0,5 bis 6,5 |
| K₂O | 0 - 4 | 0,1 bis 3,2 |
| Fe₂O₃ | 1 - 8 | 4,0 bis 6,9 |
| TiO₂ | 0 - 3 | 0 bis 1,1 |
| P₂O₅ | 0 - 2 | 0 bis 1,1 |
| MnO | 0 - 2 | 0 bis 1,1 |
| Verunreinigungen | 0 - 2 | 0 bis 1,0 |
wobei weiterhin gilt, daß die Summe aus Calciumoxid und Magnesiumoxid im Bereich von 26,1 bis 30,1 Gew.-% und die Summe aus Natriumoxid und Kaliumoxid im Bereich von 3,5 bis 6,5 Gew.-% liegt.

3. Schalldämpfertopf nach Anspruch 1 oder 2, **dadurch gekennzeichnet, daß** die Faserzusammensetzung die folgenden Bestandteile, in Gewichtsprozent, umfaßt:
| | |
|---|---|
| SiO₂ | 58,5 bis 61,0 |
| Al₂O₃ | 0,9 bis 2,05 |
| CaO | 12 bis 20 |
| MgO | 8,0 bis 18 |
| Na₂O | 3,0 bis 5,0 |
| K₂O | 0,1 bis 1,0 |
| Fe₂O₃ | 5,0 bis 7,0 |
| TiO₂ | 0 bis 0,4 |
| P₂O₅ | 0 bis 0,4 |
| MnO | 0 bis 0,4 |
| Verunreinigung | 0 bis 0,4 |
wobei weiterhin gilt, daß die Summe aus Calicumoxid und Magnesiumoxid im Bereich von 26,1 bis 30,1 Gew.-%, bevorzugt im Bereich von 28 bis 30 Gew.-% und die Summe aus Natriumoxid und Kaliumoxid im Bereich von 3,5 bis 6,5 Gew.-%, bevorzugt 3,5 bis 4,5 Gew.-% liegt.

4. Schalldämpfertopf nach einem der Ansprüche 1 bis 3, **gekennzeichnet durch** die Zusammensetzung in Gew.-%:
| | |
|---|---|
| SiO₂ | 58,5 |
| Al₂O₃ | 2,0 |
| CaO | 19,5 |
| MgO | 9,5 |
| Na₂O | 3,5 |
| K₂O | 0,2 |
| Fe₂O₃ | 6,5 |
| TiO₂ | 0,3 |

5. Schalldämpfertopf nach einem der Ansprüche 1 bis 3, **gekennzeichnet durch** die Zusammensetzung in Gew.-%:
| | |
|---|---|
| SiO₂ | 58,5 |
| Al₂O₃ | 2,0 |
| CaO | 12 |
| MgO | 17 |
| Na₂O | 3,5 |
| K₂O | 0,2 |
| Fe₂O₃ | 6,5 |
| TiO₂ | 0,3 |

6. Schalldämpfertopf nach einem der vorhergehenden Ansprüche, **dadurch gekennzeichnet, daß** die Faserfraktion mit einer Faserlänge von mehr als 5 µm, einem Durchmesser von weniger als 3 µm und einem Längen-zu-Durchmesser-Verhältnis von > 3:1 nach intratrachealer Instillation eine Halbwertszeit von weniger als 40 Tagen, vorzugsweise weniger als 35 Tagen, aufweist.

7. Schalldämpfertopf nach einem der vorhergehenden Ansprüche, **dadurch gekennzeichnet, daß** der Summenwert aus Fe₂O₃, Na₂O und Al₂O₃ der Zusammensetzung > 11 % beträgt.

8. Verwendung einer Schalldämpferwolle, die aus Fasern mit einem mittleren Faserdurchmesser von 8 bis 20 µm und vorzugsweise über 10 bis 20 µm und mit einer biologisch abbaubaren Zusammensetzung gemäß mindestens einem der vorhergehenden Ansprüche 1 bis 7 gebildet ist, für Schalldämpfertöpfe in Kfz-Schalldämpfersystemen.

## Revendications

1. Pot de silencieux pour atténuer le bruit de gaz de combustion de machines à combustion interne, **caractérisé en ce qu'**en tant que matériau d'insonorisation il comprend au moins en partie une masse fibreuse absorbant le bruit, composée de fibres qui ont un diamètre de fibres moyen compris entre 8 et 20 µm et de préférence de plus de 10 à 20 µm et qui ont une composition biologiquement dégradable qui comprend les composants suivants en % en poids
| | | Valeurs préférées |
|---|---|---|
| SiO₂ | 57 à 63 | 58,2 à 62,2 |
| Al₂O₃ | 0 à 4 | 0,05 à 2,05 |
| CaO | 10 à 25 | 12 à 23,5 |
| MgO | 5,5 à 18 | 8 à 18 |
| Na₂O | 0 à 7 | 0,5 à 6,5 |
| K₂O | 0 à 4 | 0,1 à 3,2 |
| Fe₂O₃ | 1 à 8 | 4,0 à 6,9 |
| TiO₂ | 0 à 3 | 0 à 1,1 |
| P₂O₅ | 0 à 2 | 0 à 1,1 |
| MnO | 0 à 2 | 0 à 1,1 |
| Impuretés | 0 à 2 | 0 à 1,0 |
dans lequel la somme d'oxyde de calcium et d'oxyde de magnésium est dans la gamme allant de 26,1% à 30,1% en poids et la somme d'oxyde de sodium et d'oxyde de potassium est dans la gamme allant de 3,5% à 6,5% en poids.

2. Pot de silencieux pour atténuer le bruit de gaz de combustion de machines à combustion interne, **caractérisé en ce que** celui-ci comprend au moins un moulage pour atténuer le bruit pour une utilisation dans des pots de silencieux dans des systèmes d'insonorisation de véhicules motorisés comprenant une masse fibreuse absorbant le bruit faite de fibres qui ont un diamètre de fibres moyen compris entre 8 et 20 µm et de préférence de plus de 10 à 20 µm et qui ont une composition biologiquement dégradable, qui comprend les composants suivants en % en poids
| | | Valeurs préférées |
|---|---|---|
| SiO₂ | 57 à 63 | 58,2 à 62,2 |
| Al₂O₃ | 0 à 4 | 0,05 à 2,05 |
| CaO | 10 à 25 | 12 à 23,5 |
| MgO | 5,5 à 18 | 8 à 18 |
| Na₂O | 0 à 7 | 0,5 à 6,5 |
| K₂O | 0 à 4 | 0,1 à 3,2 |
| Fe₂O₃ | 1 à 8 | 4,0 à 6,9 |
| TiO₂ | 0 à 3 | 0 à 1,1 |
| P₂O₅ | 0 à 2 | 0 à 1,1 |
| MgO | 0 à 2 | 0 à 1, 1 |
| Impuretés | 0 à 2 | 0 à 1,0 |
dans lequel la somme d'oxyde de calcium et d'oxyde de magnésium est dans la gamme allant de 26,1% à 30,1% en poids et la somme d'oxyde de sodium et d'oxyde de potassium est dans la gamme allant de 3,5% à 6,5% en poids.

3. Pot de silencieux selon la revendication 1 ou 2, **caractérisé en ce que** la composition de la fibre comprend les composants suivants en pourcentages en poids :
| | |
|---|---|
| SiO₂ | 58, 5 à 61, 0 |
| Al₂O₃ | 0,9 à 2,05 |
| CaO | 12 à 20 |
| MgO | 8,0 à 18 |
| Na₂O | 3,0 à 5,0 |
| K₂O | 0,1 à 1,0 |
| Fe₂O₃ | 5,0 à 7,0 |
| TiO₂ | 0 à 0,4 |
| P₂O₅ | 0 à 0,4 |
| MnO | 0 à 0,4 |
| Impuretés | 0 à 0,4 |
dans lequel la somme d'oxyde de calcium et d'oxyde de magnésium est dans la gamme allant de 26,1% à 30,1% en poids et de préférence dans la gamme allant de 28% à 30% en poids et la somme d'oxyde de sodium et d'oxyde de potassium est dans la gamme allant de 3,5% à 6,5% en poids, et de préférence dans la gamme allant de 3,5% à 4,5% en poids.

4. Pot de silencieux comme exposé dans l'une quelconque des revendications 1 à 3, **caractérisé par** la composition suivante en pourcentages en poids :
| | |
|---|---|
| SiO₂ | 58,5 |
| Al₂O₃ | 2,0 |
| CaO | 19,5 |
| MgO | 9,5 |
| Na₂O | 3,5 |
| K₂O | 0,2 |
| Fe₂O₃ | 6,5 |
| TiO₂ | 0,3 |

5. Pot de silencieux comme expliqué dans l'une quelconque des revendications 1 à 3, **caractérisé par** la composition suivante en pourcentages en poids :
| | |
|---|---|
| SiO₂ | 58,5 |
| Al₂O₃ | 2,0 |
| CaO | 12 |
| MgO | 17 |
| Na₂O | 3,5 |
| K₂O | 0,2 |
| Fe₂O₃ | 6,5 |
| TiO₂ | 0,3 |

6. Pot de silencieux comme expliqué dans l'une quelconque des revendications précédentes, **caractérisé en ce que** la fraction de fibre avec une longueur de fibre supérieure à 5 µm, un diamètre inférieur à 3 µm et un rapport longueur à diamètre supérieur à 3:1 a une demi-vie inférieure à 40 jours et de préférence inférieure à 35, après administration intratrachéale.

7. Pot de silencieux comme expliqué dans l'une quelconque des revendications précédentes, **caractérisé en ce que** la somme de Fe₂O₃, Na₂O et Al₂O₃ dans la composition est supérieure à 11% de celle-ci.

8. Utilisation d'une masse fibreuse absorbant le bruit composée de fibres qui ont un diamètre de fibres moyen compris entre 8 et 20 µm et de préférence de plus de 10 à 20 µm et qui ont une composition biologiquement dégradable selon au moins l'une des revendications précédentes 1 à 7, pour des pots de silencieux dans des systèmes d'insonorisation de véhicules motorisés.
